# EUROPÄISCHE PATENTANMELDUNG

(11) **EP 1 716 775 A1**
(43) Veröffentlichungstag der Anmeldung: **02.11.2006**
(21) Anmeldenummer: 06006370.8
(22) Anmeldetag: 28.03.2006
(51) Int. Cl.: A44B 21/00, F16B 2/10

(54) **Halteklammer zum Festklemmen von Gegenständen**

(30) Priorität: 25.04.2005 DE 202005006668 U; 23.05.2005 DE 202005008244 U
(71) Anmelder: IDEEMATEC Deutschland GmbH, 94574 Wallerfing (DE)
(72) Erfinder: Kufner, Johann, 94527 Aholming/Tabertshausen (DE)

(57) **Zusammenfassung**

Halteklammer (1) zum Festklemmen von Gegenständen, mit einem Klemmteil (2) aus zwei gegeneinander verschwenkbaren Klemmschenkeln (2a,2b) sowie einem Verriegelungsbügel (3), der an dem ersten Klemmschenkel (2a) in einem Schwenklager (4) angelenkt ist und in eine Verriegelungsstellung verschwenkbar ist, in welcher der gegen die Aussenseite des zweiten Klemmschenkels (2b) andrückende Verriegelungsbügel (4) beide Klemmschenkel (2a, 2b) in ihrer Schließstellung hält, wobei zum Erzeugen des Schließdrukkes die Außenseite des zweiten Klemmschenkels (2b) und die zugewandte Innenseite des Verriegelungsbügels (3) mit Rastverbindungen (5a, 5b) aus Nut und Feder versehen sind, die zur Anpassung an verschiedene Klemmdicken längs der Klemmschenkel 2a,2b) aufeinanderfolgend angeordnet sind und deren Längserstreckung quer zu der die beiden Klemmschenkel (2a, 2b) gemeinsam enthaltenden Ebene verläuft. Zum Lösen der Rastverbindung (5a,5b) ist der Verriegelungsbügel (3) in Richtung der Längserstreckung der Rastverbindung (5a, 5b) um eine Strecke bewegbar, die mindestens der Eingriffsbreite der Rastverbindung (5a, 5b) entspricht. Durch seitlichen Druck auf den Verriegelungsbügel (3) quer zur gemeinsamön Klemmschenkelebene ist die Rastverbindung (5a, 5b) lösbar und der Verriegelungsbügel (3) von der Außenseite des zweiten Klemmschenkels (2b) wegschwenkbar.

## Beschreibung

Die Erfindung betrifft eine Halteklammer zum Festklemmen von Gegenständen, insbesondere von Folien oder Planen gemäß dem Oberbegriff des Anspruches 1. Die erfindungsgemäße Halteklammer ist aber nicht nur zum Festklemmen von Folien oder Planen geeignet, sondern kann auch zum Festklemmen anderer Gegenstände wie z.B. von übereinanderliegenden Papierlagen oder Wäschestücken und dergleichen Verwendung finden.

Eine Halteklammer gemäß dem Oberbegriff des Anspruches 1 ist aus der europäischen Patentschrift 1161892 vorbekannt. Die beiden Klemmschenkel der bekannten Halteklammer, die in dieser Patentschrift mit dem Bezugszeichen 10 und 11 bezeichnet sind, sind hierbei durch ein Schwenklager 17, 23 schwenkbar miteinander verbunden. Der einarmige Verriegelungsbügel 15, mit dem beide Klemmschenkel in ihrer Schließstellung gehalten werden können, weist zu diesem Zweck eine Rastnase 15b auf, welche in eine von mehreren Längsnuten 14a je nach der Dicke des festzuklemmenden Gegenstandes eingerastet werden kann. Diese Längsnuten, die quer zur gemeinsamen Klemmschenkelebene verlaufen, sind an der Außenseite des einen Klemmschenkels 11 vorgesehen, über den der Verriegelungsbügel zum Schließen der Rastverbindung und damit der Halteklammer geschwenkt wird. Um die Halteklammer zu lösen, muss dessen Rastnase aus der betreffenden Längsnut herausgezogen werden, indem der Bügel anfänglich in Richtung zum vorderen Klemmschenkelende hingedrückt wird, um Rastnase und Eingriffsfläche der betreffenden Längsnut voneinander zu trennen und den Verriegelungsbügel von den Klemmschenkeln wegzuschwenken. Da diese anfängliche Bügelbewegung den Klemmdruck der Heftklammer vergrößert, erfordert das Lösen der bekannten Heftklammer einen relativ großen Kraftaufwand in Richtung der gemeinsamen Klemmschenkelebene, um die Rastverbindung zu trennen und den Verriegelungsbügel in seine entriegelte Stellung zu bringen.

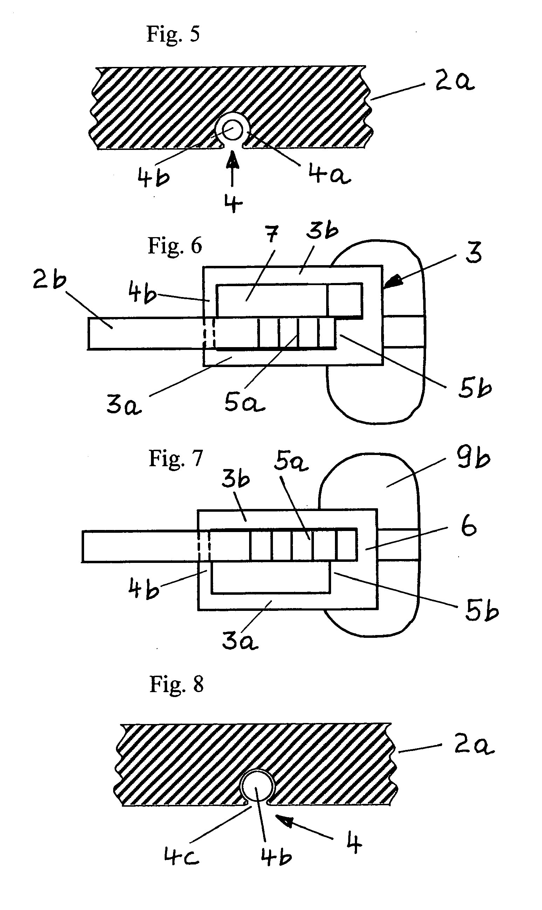

Eine Halteklammer mit mehreren aus Nut und Feder bestehenden Rastverbindungen zur Anpassung an die Dicke der festzuklemmenden Gegenstände ist auch aus der US-Patentschrift 4536924 vorbekannt, die in Spalte 2, Zeilen 1 - 8 der europäischen Patentschrift 1161892 gewürdigt ist. Auch hier ist bei der in den Figuren 6 und 7 dieser Vorveröffentlichung gezeigten Ausführungsform eine Art Verriegelungsbügel 13 vorgesehen, der mit dem einen Klemmschenkel der Halteklammer aus einem Stück besteht und an dem mehrere sich quer zur gemeinsamen Klemmschenkelebene erstreckende Längsnuten vorgesehen sind, die mit einer Rastnase am zweiten Klemmschenkel zusammenarbeiten. Zum Entriegeln der Halteklammer wird auch hier auf den Verriegelungsbügel 13 ein in der gemeinsamen Klemmschenkelebene wirkender Druck ausgeübt, um diesen Bügel von der Rastnase des betreffenden Klemmschenkels wegzuschwenken, was ebenfalls einen relativ großen Kraftaufwand mit sich bringt.

Eine Halteklammer mit Verriegelungsbügel ist ebenfalls aus der GB-Patentschrift 1588907 vorbekannt, die mit unter den zitierten Dokumenten in der europäischen Patentschrift 1161892 angegeben ist. Der Verriegelungsbügel 40 dieser bekannten Konstruktion wird gleichfalls sowohl zum Schließen als auch zum Öffnen der Halteklammer in der gemeinsamen Klemmschenkelebene durch einen entsprechend aufgebrachten Druck verschwenkt, um die Klemmschenkel der Halteklammer in die Offenstellung zu bewegen.

Ausgehend von dem in der europäischen Patentschrift 1161892 offenbarten Stand der Technik liegt der Erfindung die Aufgabe zugrunde, eine Halteklammer zum Festklemmen von Gegenständen mit einem neuartigen Öffnungsmechanismus auf der Grundlage einer neuartigen Klammerkonstruktion zu schaffen, deren Entriegelung einen relativ geringen Kraftaufwand erfordert.

Die Lösung dieser Aufgabe wird durch die Merkmale des kennzeichnenden Teiles des Anspruches 1 realisiert.

Im Gegensatz zum Stand der Technik wird beim Erfindungsgegenstand der Verriegelungsbügel zum Öffnen bzw. Entriegeln der Halteklammer nicht in der gemeinsamen Klemmschenkelebene bewegt, sondern quer dazu, sodass durch einen entsprechenden seitlichen Druck auf den Verriegelungsbügel die betreffende Rastverbindung gelöst werden kann. Dadurch erfordert die Entriegelung der Halteklammer einen relativ kleinen Kraftaufwand, da der auf den Bügel aufzuwendende Druck in Richtung der Längserstreckung der betreffenden Rastverbindung verläuft, sodass die miteinander in Berührung stehenden Eingriffsflächen dieser Rastverbindung leicht gegeneinander verschoben werden können.

Um den Verriegelungsbügel auf der Grundlage des erfindungsgemäßen Konzeptes zum Entriegeln der Halteklammer seitlich zu verschieben, gibt es verschiedene erfindungsgemäße Realisierungsmöglichkeiten für die Schwenklagerung und die Ausbildung des Verriegelungsbügels. Diese erfindungsgemäßen Realisierungsmöglichkeiten sind in den Ansprüchen 2 - 5 gekennzeichnet, von denen jede Realisierungsmöglichkeit für sich allein Verwendung finden kann. Es ist in diesem Zusammenhang aber auch denkbar, ggf. die eine mit der anderen Realisierungsmöglichkeit zu kombinieren, sofern dies für den jeweils vorliegenden Fall zweckmäßig erscheint. So kann z.B. die Verschwenklagerung des Verriegelungsbügels mit radialem Spiel durch Vorsehen eines axialen Spieles ergänzt werden, um den Bügel in seine Entriegelungsstellung zu verschieben. Auch die Ausführungsform gemäß Anspruch 5 kann ggf. durch ein radiales und/oder axiales Spiel der Schwenklagerung des Verriegelungsbügels ergänzt werden.

Anspruch 6 beschreibt eine vorteilhafte erfindungsgemäße Ausführungsform eines hier verwendbaren Verriegelungsbügels. Da bei dieser Konstruktion der Verriegelungsbügel zwei Bügelarme umfasst, die den zweiten Klemmschenkel des Klemmteiles der Halteklammer zwischen sich einschließen und von denen der eine erste Bügelarm diesem Klemmschenkel unmittelbar benachbart ist, vorzugsweise direkt an diesem Klemmschenkel anliegt, wird die Führung des Verriegelungsbügels beim Verschwenken in seine Verriegelungsstellung als auch dessen Halterung in dieser Stellung verbessert.

Während Anspruch 7 eine vorteilhafte Ausführungsform für das Rastelement am Verriegelungsbügel beschreibt, wird mit den Merkmalen des Anspruches 8 eine weitere Verbesserung der Führung und Halterung des Verriegelungsbügels an der Halteklammer erreicht, da hier erfindungsgemäß die beiden Bügelarme des Verriegelungsbügels beide Klemmschenkel des Klemmteiles zwischen sich einschließen.

Die Gegenstände der Ansprüche 9 und 10 kennzeichnen eine besonders wirtschaftlich herstellbare Ausführungsform für das Schwenklager des Verriegelungsbügels.

Während die Ansprüche 11 - 13 verschiedene erfindungsgemäße Ausführungsformen von Verriegelungsbügeln beanspruchen, die an die spezielle Ausbildung seines Schwenklagers entsprechend angepasst sind, verhindert der Gegenstand des Anspruches 14, dass sich der Verriegelungsbügel aus seiner Verriegelungsstellung ungewollt lösen kann.

Der Gegenstand des Anspruches 15 stellt sicher, dass der Verriegelungsbügel in seiner Verriegelungsstellung einen ausreichend großen Schließdruck auf die Klemmschenkel der Halteklammer ausüben kann.

Die Ansprüche 16 und 17 beinhalten vorteilhafte Herstellungsmerkmale einer erfindungsgemäßen Halteklammer, wobei aber zu bemerken ist, dass die beiden Klemmschenkel der Halteklammer auch als getrennte Teile ausgeführt und durch eine zusätzliche Feder in ihre Offenstellung vorgespannt sein können, ohne den Schutzbereich der Erfindung zu verlassen.

Während die Merkmale des Anspruches 18 eine sichere Halterung insbesondere von Folien oder Planen durch die erfindungsgemäße Halteklammer gewährleisten, ermöglicht der Gegenstand des Anspruches 19 eine Anbringung z.B. eines Halteseiles an einer bereits festgeklemmten erfindungsgemäßen Halteklammer.

Die Erfindung wird im Folgenden anhand schematischer, nicht maßstabsgetreuer Zeichnungen an mehreren Ausführungsbeispielen noch näher erläutert. In den Zeichnungen zeigen:
Figur 1 eine Seitenansicht einer erfindungsgemäßen Halteklammer mit in Offenstellung befindlichem Verriegelungsbügel und mit angebrachtem Ösenring,
Figur 2 eine der Figur 1 entsprechende Darstellung, wobei aber der Ösenring weggelassen ist und sich der Verriegelungsbügel in seiner Verriegelungsstellung befindet,
Figur 3 eine Draufsicht auf die verriegelte Halteklammer von Figur 2,
Figur 4 eine der Figur 3 entsprechend Darstellung mit in seine Offenstellung verschwenktem Verriegelungsbügel,
Figur 5 eine zu den Figuren 2 - 4 gehörende Schwenklagerung des Verriegelungsbügels mit radialem Spiel,
Figuren 6 und 7 die Draufsicht einer Halteklammer mit einer zweiten Ausführungsform eines erfindungsgemäßen Verriegelungsbügels in Verriegelungs- und Offen-Stellung,
Figur 8 die bei der Halteklammer der Figuren 6 und 7 verwendete Schwenklagerung des Verriegelungsbügels mit axialem Spiel,
Figur 9 in Draufsicht eine dritte Ausführungsform eines erfindungsgemäßen Verriegelungsbügels,
Figur 10 eine der Figur 9 entsprechende Draufsicht auf den Verriegelungsbügel in unverbogenem Zustand,
Figur 11 eine Schnittdarstellung längs der Schnittlinie A - A von Figur 10,
Figur 12 eine vergrößerte Darstellung des in den Figuren 3 und 4 gezeigten Verriegelungsbügels mit einem der Figur 11 entsprechendem Querschnitt,
Figur 13 eine Draufsicht auf die Rastverzahnung des einen Klemmschenkels in Form einer Schrägverzahnung,
Figur 14 eine Darstellung längs der Schnittlinie B - B von Figur 13, und
Figur 15 eine besondere Herstellungsweise für das Klemmteil einer erfindungsgemäßen Halteklammer.

In den Zeichnungen und der nachfolgenden Beschreibung sind einander entsprechende Einzelteile mit den gleichen Bezugszeichen bezeichnet.

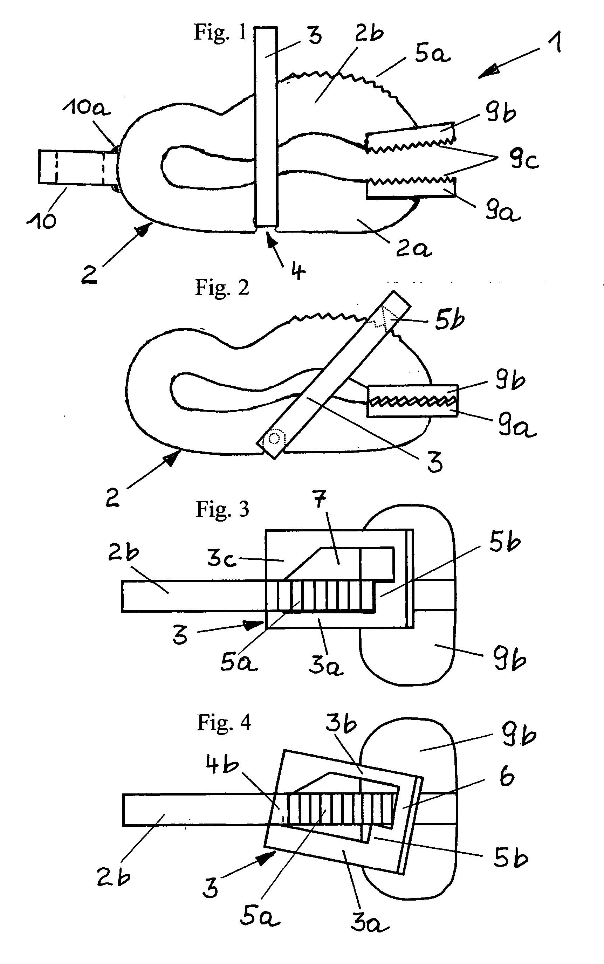

Die in den Figuren 1 und 2 dargestellte und insgesamt mit dem Bezugszeichen 1 dargestellte Halteklammer weist ein Klemmteil 2 aus zwei gegeneinander verschwenkbaren Klemmschenkeln 2a und 2b auf, die einstückig ausgebildet sind und aus Kunststoff bestehen. Die Klemmschenkel 2a und 2b sind auf Grund der Materialeigenschaften des Kunststoffes in ihre Offenstellung vorgespannt. Außerdem ist ein Verriegelungsbügel 3 vorgesehen, der an dem ersten Klemmschenkel 2a in einem Schwenklager 4 angelenkt ist. Der Verriegelungsbügel 3 kann aus der in Figur 1 gezeigten Offenstellung in eine in Figur 2 dargestellte Verriegelungsstellung verschwenkt werden, in welcher er gegen die Außenseite des zweiten Klemmschenkels 2b andrückt und beide Klemmschenkel in ihrer Schließstellung hält. Zum Erzeugen des Schließdruckes sind mehrere Rastverbindungen aus Nut und Feder vorgesehen, wobei die Außenseite des zweiten Klemmschenkels 2b mehrere längs des Klemmschenkels aufeinander folgende Rastnuten 5a aufweist, deren Längserstreckung quer zu der die beiden Klemmschenkel gemeinsam enthaltenen Ebene verläuft, die mit der Zeichenebene identisch ist. Außerdem ist am Verriegelungsbügel 3 eine Rastnase 5b vorgesehen, welche je nach der Dicke der festzuklemmenden Gegenstände in eine der Rastnuten 5a einrasten kann.

Zum Lösen der betreffenden Rastverbindung 5a, 5b ist der Verriegelungsbügel 3 in Richtung der Längserstreckung der betreffenden Rastverbindung, also im wesentlichen senkrecht zur Zeichenebene, um eine Strecke zu bewegen, die mindestens der Eingriffsbreite der Rastverbindung entspricht. Durch seitlichen Druck auf den Verriegelungsbügel 3 quer zur gemeinsamen Klemmschenkelebene wird dabei die betreffende Rastverbindung 5a, 5b gelöst, sodass der Verriegelungsbügel 3 von der Außenseite des zweiten Klemmschenkels 2b weggeschwenkt werden kann. Die Figuren 3 und 4 zeigen dabei eine erste Ausführungsform des Verriegelungsbügels 3 in Schließ- bzw. Offen-Stellung. Der Verriegelungsbügel 3 umfasst zwei sich im Abstand parallel zueinander in einer gemeinsamen Ebene erstreckende Arme 3a und 3b, deren eine Enden über die Bügelschwenkachse 4b verbunden sind. Die anderen Bügelenden sind mittels eines Joches 6 miteinander verbunden, das an dem dem ersten Bügelarm 3a benachbarten Bereich an seiner Innenseite einen nach innen vorstehenden Ansatz 6a trägt. Dieser Ansatz ist an seinem vorderen Ende mit einer Abschrägung versehen und bildet auf diese Weise das eine als Rastnase 5b ausgebildete Rastelement der Rastverbindungen.

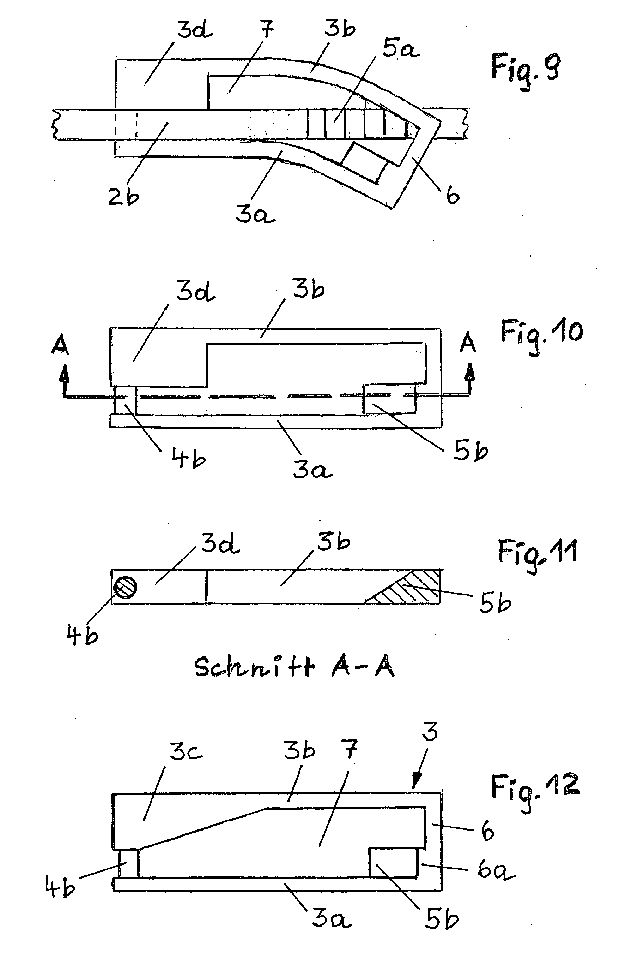

Wie die Figuren 1, 2 und 5 zeigen, ist das Schwenklager 4 des Verriegelungsbügels 3 an der dem zweiten Klemmschenkel 2b abgewandten Außenseite des ersten Klemmschenkels 2a vorgesehen, sodass die beiden Bügelarme 3a und 3b des Verriegelungsbügels beide Klemmschenkel 2a und 2b zwischen sich einschließen. Dabei liegt in der in Figur 3 dargestellten Verriegelungsstellung des Verriegelungsbügels 3 der der Rastnase 5b benachbarte erste Bügelarm 3a an der Stirnaußenseite der beiden Klemmschenkel 2a und 2b direkt an, während gleichzeitig zwischen dem zweiten Bügelarm 3b und der diesem Bügelarm zugewandten Stirnaußenseite der beiden Klemmschenkel ein Zwischenraum 7 vorhanden ist. Wie insbesondere in Figur 12 dargestellt, verjüngt sich dieser Zwischenraum 7 in Richtung zur Schwenkachse 4b hin durch eine konische Armverbreiterung 3c, die gemäß Figur 4 bei gelöster Rastverbindung, also in der Offenstellung des Verriegelungsbügels 3, als seitlicher Anschlag des Bügels gegen die zugewandte Stirnaußenseite der Klemmschenkel 2a und 2b dient.

Um den Verriegelungsbügel 3 aus seiner Verriegelungsstellung in die in Figur 4 gezeigte Offenstellung zu bewegen, ist gemäß Figur 5 dessen Schwenkachse 4b in seinem Schwenklager 4 mit radialem Spiel gelagert, das so groß ist, dass bei seitlichen Druck auf den Verriegelungsbügel 3 zum Lösen der betreffenden Rastverbindung 5a, 5b die Schwenkachse 4b in dem Schwenklager 4 verkantet und den Bügel 3 auf diese Weise in die in Figur 4 gezeigte Offenstellung wegkippt. Der Zwischenraum 7 ist dabei so breit gewählt, dass derselbe in der in Figur 4 gezeigten weggekippten Stellung des Verriegelungsbügels 3 die betreffende Rastverzahnung 5a an der Außenseite des zweiten Klemmschenkels 2b aufnimmt.

Zur großflächigen Erfassung der festzuklemmenden Gegenstände tragen die Klemmschenkel 2a und 2b an den einander zugewandten Innenseiten ihrer vorderen freien Enden Pressbacken 9a und 9b mit breiten Klemmflächen, die mit einer im Winkel von im wesentlichen 90° zu der gemeinsamen Klemmschenkelebene verlaufenden Verzahnung 9c versehen sind.

Die in den Figuren 6 - 8 gezeigte zweite Ausführungsform eines Verriegelungsbügels entspricht in wesentlichen Teilen der ersten Ausführungsform. Allerdings ist hier die Breite des Zwischenraumes 7 zwischen dem zweiten Bügelarm 3b und den diesem Bügelarm zugewandten Klemmschenkelstirnseiten über die gesamte Bügelarmlänge konstant. Außerdem ist die Bügelschwenkachse 4b gemäß Figur 8 im wesentlichen nur mit axialem Spiel in ihrem Schwenklager 4 gelagert, das so groß ist, dass bei seitlichem Druck auf den Verriegelungsbügel 3, also bei einem Druck im wesentlichen senkrecht zur Zeichenebene, der Bügel mit seiner Schwenkachse 4b aus seiner in Figur 6 gezeigten Verriegelungsstellung in axialer Richtung um eine Strecke verschiebbar ist, die ausreicht, den Verriegelungsbügel 3 in die in Figur 7 gezeigte Offenstellung zu bringen und auf diese Weise die Rastverbindung 5a, 5b zu lösen.

Während bei den beiden ersten Ausführungsformen der Verriegelungsbügel 3 aus einem im wesentlichen biegesteifen Material besteht, ist der Verriegelungsbügel bei seiner in den Figuren 9 - 11 dargestellten dritten Ausführungsform aus elastisch nachgiebigem Material gebildet. Ferner weist dieser Verriegelungsbügel, der in vielen konstruktiven Merkmalen den Bügeln der ersten beiden Ausführungsformen entspricht, an dem der Schwenkachse 4b benachbarten Endbereich des zweiten Bügelarmes 3b eine Armverbreiterung 3d auf, mit der dieser Bügelarm 3b über die Länge dieser Armverbreiterung 3d an der zugewandten Klemmschenkelstirnseite anliegt. Außerdem ist die Schwenkachse 4b dieses Verriegelungsbügels in dem Schwenklager 4 im wesentlichen spielfrei, d.h. ohne wesentliches radiales und axiales Spiel, gelagert. Auf diese Weise kann der Verriegelungsbügel 3 in der gemeinsamen Klemmschenkelebene, also in der Zeichenebene, um sein Schwenklager 4 verschwenkt werden, wobei die Armverbreiterung 3d als stabilisierende Führung wirkt.

Damit der Verriegelungsbügel 3 aus seiner Verriegelungsstellung in die in Figur 9 dargestellte Offenstellung bewegt werden kann, ist das den Bügel bildende elastisch nachgiebige Material so biegsam gewählt, dass bei seitlichem Druck auf den Verriegelungsbügel 3 derselbe sich unter Lösen der Rastverbindung seitlich verbiegt und bei Druckentlastung in seine unverbogene, in Figur 10 gezeigte Form zurückkehrt. Die in Figur 11 im Schnitt gezeigte Rastnase 5b dieses Verriegelungsbügels ist dabei im übrigen identisch mit der Rastnase 5b der anderen Bügelausführungsformen.

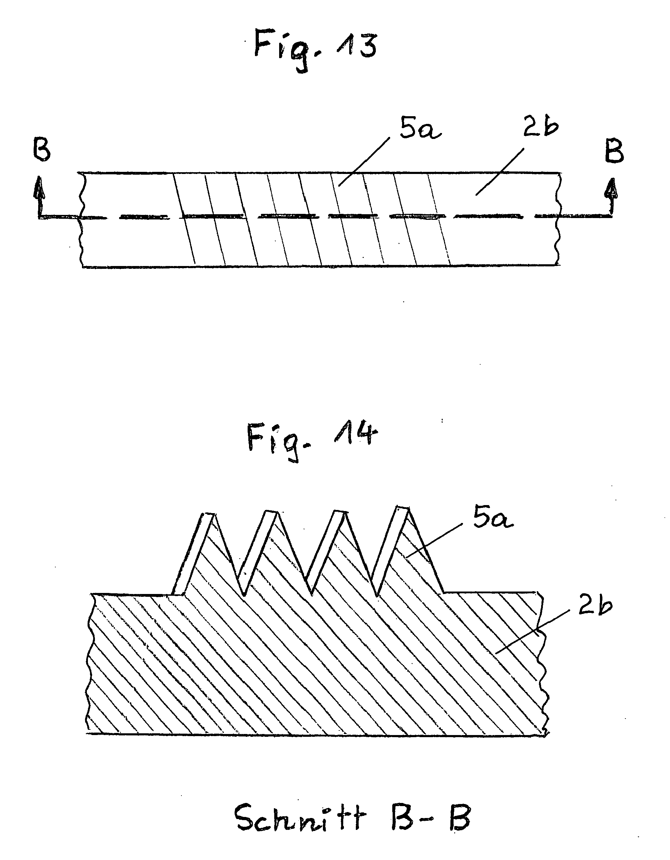

Unter Bezugnahme auf die Figuren 13 und 14 können die Rastelemente 5a am zweiten Klemmschenkel 2b, hier in Form von Rastnuten, gegenüber der Richtung der Lösebewegung des Verriegelungsbügels schräg verlaufen. Die Rastnase 5b am Verriegelungsbügel 3 weist dabei den gleichen Schrägverlauf auf. Die Richtung dieses Schrägverlaufes ist so gewählt, dass sich der Reibungswiderstand zwischen den miteinander in Eingriff stehenden Rastelementen 5a und 5b mit fortschreitender Lösebewegung des Verriegelungsbügels 3 erhöht. Auf diese Weise kann ein unbeabsichtigtes Verschieben des Verriegelungsbügels aus seiner Verriegelungs- in seine Offen-Stellung mit hoher Sicherheit vermieden werden.

Bei allen gezeigten Ausführungsformen ist das Schwenklager 4 eine Aussparung, die gemäß den Figuren 5 und 8 in der dem zweiten Klemmschenkel 2b abgewandten Außenseite des ersten Klemmschenkels 2a eingearbeitet ist und sich quer zur gemeinsamen Klemmschenkelebene, die mit der Zeichenebene identisch ist, erstreckt. Vorzugsweise besteht dabei der erste Klemmschenkel 2a aus einem relativ geringfügig elastisch nachgiebigem Material. Die in der Ebene der betreffenden Außenseite dieses Klemmschenkels 2a liegende Öffnung 4c (Figur 8) der Aussparung 4 besitzt dabei in Richtung der Klemmschenkellängserstreckung gesehen eine Breite, die um soviel kleiner als der Schwenkachsendurchmesser ist, dass die Schwenkachse 4b des Verriegelungsbügels 3 unter Druck und elastischem Nachgeben der Öffnungsränder in die Aussparung eingedrückt werden kann.

Gemäß den Figuren 6, 7 und 9 kann das Schwenklager 4 des Verriegelungsbügels 3 so gelegt werden, dass dasselbe in der gemeinsamen Klemmschenkelebene und in Richtung der Schwenkbewegung des Verriegelungsbügels in seine Verriegelungsstellung hin gesehen vor dem vordersten Rastelement 5a am zweiten Klemmschenkel 2b liegt. Dadurch ist eine besonders hohe Klemmkraft auf die beiden Klemmschenkel der erfindungsgemäßen Halteklammer sichergestellt.

Das Klemmteil 2 mit seinen beiden Klemmschenkeln 2a und 2b und der Verriegelungsbügel 3 können jeweils einstückig aus Metall, Kunststoff und/oder Holz hergestellt sein. Gemäß Figur 1 kann das Klemmteil einen am schwenklagerseitigen Klemmschenkelende vorgesehenen Ösenring 10 tragen, der durch eine Schweiß-, Löt- oder Klebeverbindung 10a am Klemmteil 2 befestigt ist und zum Einhängen z.B. eines Seiles oder Seilhakens dient.

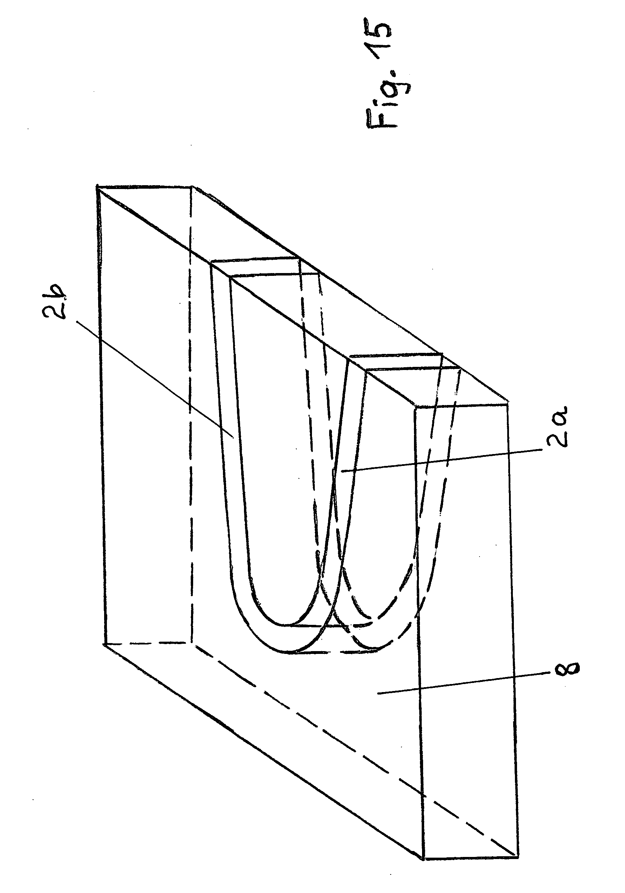

Wie in Figur 15 schematisch dargestellt können die beiden Klemmschenkel 2a und 2b der Halteklammer einstückig aus einer Kunststoff- oder Metall-Platte 8 ausgeschnitten oder ausgestanzt werden, und zwar so, dass die der Schenkelbreite entsprechende Plattendicke größer als die Dicke der ausgeschnittenen oder ausgestanzten Klemmschenkel ist. Auf diese Weise ist das Klemmteil hinreichend elastisch mit in seine Offenstellung hin vorgespannten Klemmschenkeln.

## Patentansprüche

1. Halteklammer (1) zum Festklemmen von Gegenständen, insbesondere von Folien oder Planen, mit einem Klemmteil (2) aus zwei gegeneinander verschwenkbaren Klemmschenkeln (2a, 2b) sowie einem Verriegelungsbügel (3), der an dem einen ersten Klemmschenkel (2a) in einem Schwenklager (4) angelenkt ist und in eine Verriegelungsstellung verschwenkbar ist, in welcher der gegen die Außenseite des zweiten Klemmschenkels (2b) andrückende Verriegelungsbügel (4) beide Klemmschenkel (2a, 2b) in ihrer Schließstellung hält, wobei zum Erzeugen des Schließdruckes die Außenseite des zweiten Klemmschenkels (2b) und die zugewandte Innenseite des Verriegelungsbügel (3) mit einer, vorzugsweise mit mehreren Rastverbindungen (5a, 5b) aus Nut und Feder versehen sind, die zur Anpassung an verschiedene Klemmdicken längs der Klemmschenkel (2a, 2b) aufeinanderfolgend angeordnet sind und deren Längserstreckung quer zu der die beiden Klemmschenkel (2a, 2b) gemeinsam enthaltenden Ebene verläuft, **dadurch gekennzeichnet, dass** zum Lösen der Rastverbindung (5a, 5b) der Verriegelungsbügel (3) in Richtung der Längserstreckung der Rastverbindung (5a, 5b) oder Rastverbindungen (5a, 5ab) um eine Strecke bewegbar ist, die mindestens der Eingriffsbreite der Rastverbindung oder Rastverbindungen (5a, 5b) entspricht, sodass durch seitlichen Druck auf den Verriegelungsbügel (3) quer zur gemeinsamen Klemmschenkelebene die betreffende Rastverbindung (5a, 5b) lösbar und der Verriegelungsbügel (3) von der Außenseite des zweiten Klemmschenkels (2b) wegschwenkbar ist.

2. Halteklammer nach Anspruch 1, **dadurch gekennzeichnet, dass** der Verriegelungsbügel (3 in Figur 3 und 4) an dem ersten Klemmschenkel (2a) mit radialem Spiel (4a in Figur 5) schwenkbar angelenkt ist, das so groß ist, dass bei seitlichem Druck auf den Verriegelungsbügel (3) zum Lösen der Rastverbindung (2a, 2b) die Schwenkachse (4b) des Bügels (3) in ihrem Schwenklager (4) verkantet und den Bügel (3) auf diese Weise seitlich wegkippt.

3. Halteklammer nach Anspruch 1 oder 2, **dadurch gekennzeichnet, dass** der Verriegelungsbügel (3 in Figur 6 u. 7) an dem ersten Klemmschenkel (2a in Figur 8) mit axialem Spiel verschwenkbar angelenkt ist, das so groß ist, dass bei seitlichem Druck auf den Verriegelungsbügel (3) zum Lösen der Rastverbindung (5a, 5b) der Bügel (3) mit seiner Schwenkachse (4b) in axialer Richtung um eine Strecke verschiebbar ist, die ausreicht, die Rastverbindung (5a, 5b) zu lösen.

4. Halteklammer nach einem oder mehreren der Ansprüche 1 - 3, **dadurch gekennzeichnet, dass** der Verriegelungsbügel (3) aus einem biegesteifen Material besteht.

5. Halteklammer nach Anspruch 1, **dadurch gekennzeichnet, dass** der Verriegelungsbügel (3 in Figur 9 und 10) an dem ersten Klemmschenkel (2a) im wesentlichen spielfrei verschwenkbar angelenkt ist und aus einem elastisch nachgiebigen Material besteht, das so biegsam ist, dass bei seitlichem Druck auf den Verriegelungsbügel (3) derselbe sich unter Lösen der Rastverbindung (5a, 5b) seitlich verbiegt und bei Druckentlastung in seine unverbogene Form zurückkehrt.

6. Halteklammer nach einem oder mehreren der Ansprüche 1 - 5, **dadurch gekennzeichnet, dass** der Verriegelungsbügel (3) zwei sich im Abstand parallel zueinander in einer gemeinsamen Ebene erstreckende Arme (3a, 3b) umfasst, deren eines Ende über die Bügelschwenkachse (4b) und deren anderes Ende über ein Joch (6) miteinander verbunden sind, das an dem dem ersten Bügelarm (3a) benachbarten Bereich an seiner Innenseite das eine Rastelement (5b) der Rastverbindung oder Rastverbindungen (5a, 5b), vorzugsweise eine Rastnase trägt, und dass der Verriegelungsbügel (3) derart an dem ersten Klemmschenkel (2a) angelenkt ist, dass in der Verriegelungsstellung der dem Rastelement (5b) benachbarte erste Bügelarm (3a) der einen Stirnaußenseite des zweiten Klemmschenkels (2b) unmittelbar benachbart ist, vorzugsweise direkt anliegt, während gleichzeitig zwischen dem zweiten Bügelarm (3b) und der diesem Bügelarm zugewandten Stirnaußenseite des zweiten Klemmschenkels (2b) ein Zwischenraum (7) vorhanden ist, der so breit ist, dass derselbe bei seitlichem Druck auf den Verriegelungsbügel (3) zum Lösen der Rastverbindung (5a, 5b) das an der Außenseite des zweiten Klemmschenkels (2b) vorgesehene andere Rastelement (5a) aufnimmt.

7. Halteklammer nach Anspruch 6 mit einer Rastnase (5b) an der Innenseite des Joches (6) des Verriegelungsbügels (3), **dadurch gekennzeichnet, dass** die Rastnase (5b in Figur 11 u. 12) durch einen vom Joch (6) nach innen vorstehenden Ansatz (6a) mit einer Abschrägung an seinem vorderen Ende gebildet ist.

8. Halteklammer nach Anspruch 6 oder 7, **dadurch gekennzeichnet, dass** das Schwenklager (4) des Verriegelungsbügels (3) an der dem zweiten Klemmschenkel (2b) abgewandten Außenseite des ersten Klemmschenkels (2a) vorgesehen ist, wobei die beiden Bügelarme (3a, 3b) beide Klemmschenkel (2a, 2b) zwischen sich einschließen.

9. Halteklammer nach Anspruch 8, **dadurch gekennzeichnet, dass** das Schwenklager (4 in Figur 5 und 8) eine Aussparung ist, die in der dem zweiten Klemmschenkel (2b) abgewandten Außenseite des ersten Klemmschenkels (2a) eingearbeitet ist und sich quer zur gemeinsamen Klemmschenkelebene erstreckt.

10. Halteklammer nach Anspruch 9, **dadurch gekennzeichnet, dass** zumindest der erste Klemmschenkel (2a) aus einem elastisch nachgiebigen Material besteht, und dass die in der Ebene der betreffenden Außenseite dieses Klemmschenkels (2a) liegende Öffnung (4c in Figur 8) der Aussparung (4) in Richtung der Klemmschenkellängserstreckung gesehen eine Breite besitzt, die um soviel kleiner als der Schwenkachsendurchmesser ist, dass die Schwenkachse (4b) unter Druck und elastischem Nachgeben der Öffnungsränder in die Aussparung (4) eindrückbar ist.

11. Halteklammer nach einem oder mehreren der Ansprüche 6 -10 in Kombination mit Anspruch 2, **dadurch gekennzeichnet, dass** sich der Zwischenraum (7) zwischen dem zweiten Bügelarm (3b) und der diesem Bügelarm (3b) zugewandten Klemmschenkelstirnseite zur Schwenkachse (4) durch eine allmähliche Armverbreiterung (3c) hin konisch verjüngt, die bei gelöster Rastverbindung (5a, 5b) als seitlicher Anschlag für den weggekippten Verriegelungsbügel (3) dient.

12. Halteklammer nach einem oder mehreren der Ansprüche 6 - 10 in Kombination mit Anspruch 3, **dadurch gekennzeichnet, dass** die Zwischenraumbreite zwischen dem zweiten Bügelarm (3b in Figur 6) und der diesem Bügelarm (3b) zugewandten Klemmschenkelstirnseite über die gesamte Bügelarmlänge im wesentlichen konstant ist.

13. Halteklammer nach einem oder mehreren der Ansprüche 6 - 10 in Kombination mit Anspruch 5, **dadurch gekennzeichnet, dass** der der gemeinsamen Schwenkachse (4b) benachbarte Endbereich des zweiten Bügelarmes (3b in Figur 9 u. 10) eine Armverbreiterung (3d) aufweist, mit der dieser Bügelarm (3b) über die Länge dieser Armverbreiterung (3d) an der zugewandten Klemmschenkelstirnseite anliegt und auf diese Weise die Lagerung des Verriegelungsbügels (3) stabilisiert.

14. Halteklammer nach einem oder mehreren der Ansprüche 1 - 13, **dadurch gekennzeichnet, dass** die Rastelemente (5a, 5b in Figur 13 u. 14) am Verriegelungsbügel (3) und am zweiten Klemmschenkel (2b) gegenüber der Richtung der Lösebewegung des Verriegelungsbügels (3) derart schräg verlaufen, dass sich der Reibungswiderstand zwischen den miteinander in Eingriff stehenden Rastelementen (5a, 5b) mit fortschreitender Lösebewegung des Verriegelungsbügels (3) erhöht.

15. Halteklammer nach einem oder mehreren der Ansprüche 1 - 14, **dadurch gekennzeichnet, dass** das Schwenklager (4) des Verriegelungsbügels (3) in der gemeinsamen Ebene der beiden Klemmschenkel (2a, 2b) und in Richtung der Schwenkbewegung des Verriegelungsbügels (3) in seine Verriegelungsstellung gesehen vor dem Rastelement (5a) bzw. vor dem vordersten Rastelement (5a) des zweiten Klemmschenkels (2b) liegt.

16. Halteklammer nach einem oder mehreren der Ansprüche 1 - 15, **dadurch gekennzeichnet, dass** die beiden Klemmschenkel (2a, 2b) einerseits und der Verriegelungsbügel (3) andererseits jeweils einstückig ausgebildet sind und aus Metall, Kunststoff und/oder Holz bestehen.

17. Halteklammer nach Anspruch 16 mit aus elastisch nachgiebigem Kunststoff oder Metall bestehenden Klemmschenkeln (2a, 2b), **dadurch gekennzeichnet, dass** die beiden Klemmschenkel (2a, 2b) einstückig aus einer Kunststoff- oder Metall-Platte (8 in Figur 15) so ausgeschnitten oder ausgestanzt sind, dass die der Schenkelbreite entsprechende Plattendicke größer als die Dicke der ausgeschnittenen oder ausgestanzten Klemmschenkel (2a, 2b) ist.

18. Halteklammer nach einem oder mehreren der Ansprüche 1 - 17, **dadurch gekennzeichnet, dass** die Klemmschenkel (2a, 2b) an den einander zugewandten Innenseiten ihrer vorderen freien Enden Pressbacken (9a, 9b) mit breiten Klemmflächen tragen, die vorzugsweise mit einer im Winkel von im wesentlichen 90° zu der gemeinsamen Klemmschenkelebene verlaufenden Verzahnung (9c) versehen sind.

19. Halteklammer nach einem oder mehreren der Ansprüche 1 - 18, **gekennzeichnet durch** einen am schwenklagerseitigen Klemmschenkelende vorgesehenen Ösenring (10 in Figur 1) oder Haltehaken.
